# EUROPEAN PATENT APPLICATION

(11) **EP 3 051 468 A1**
(43) Date of publication of application: **03.08.2016**
(21) Application number: 16152984.7
(22) Date of filing: 27.01.2016
(51) Int. Cl.: G06Q 10/06, G06Q 10/10

(54) **A GRAPHICAL USER INTERFACE FOR TEMPORAL REPRESENTATION OF STRUCTURED INFORMATION IN AN OBJECT MODEL**

(30) Priority: 29.01.2015 US 201562109592 P; 26.03.2015 US 201514670089
(71) Applicant: Palantir Technologies, Inc., Palo Alto, California 94301 (US)
(72) Inventor: Danka, Miklós András, Palo Alto, CA California 94301 (US); Nichols, David, Palo Alto, CA California 94301 (US); Spencer-Harper, Quentin, Palo Alto, CA California 94301 (US); Järleberg, Erik, Palo Alto, CA California 94301 (US); Ojamies, Petri, Palo Alto, CA California 94301 (US); Lipsanen, Pekko, Palo Alto, CA California 94301 (US); Ferm, Emanuel, Palo Alto, CA California 94301 (US); Lilja, Shahan, Palo Alto, CA California 94301 (US)
(74) Representative: Jones, Nicholas Michael

(57) **Abstract**

Computer-implemented systems and methods are disclosed for representing an object model, wherein the systems and methods acquire information about a plurality of entities associated with an object model and acquire information about a plurality of events associated with the plurality of entities, wherein some of the plurality of events include temporal information of the entities. In accordance with some embodiments, the systems and methods further evaluate relationships of the entities using the information about the plurality of events and generate a representation of the relationships of the entities using the temporal information. In accordance with some embodiments, the systems and methods receive user input and update the representation in response to the user input. In accordance with some embodiments, the representation includes events placed on timelines corresponding to the entities. In accordance with some embodiments, the systems and methods include a map displaying location information.

## Description

### FIELD

This specification relates to a graphical user interface for temporal representation of structured information in an object model.

### BACKGROUND

Vast amounts of data are readily available to analysts, researchers, and laypeople today, on the one hand allowing them to perform more complicated and detailed data analyses than ever, but on the other hand making it more difficult to quickly sort through the data.

### BRIEF DESCRIPTION OF THE DRAWINGS

Reference will now be made to the accompanying drawings, which illustrate exemplary embodiments of the present disclosure. In the drawings:
**Figs. 1A-1B** are block diagrams of an exemplary data fusion system, consistent with embodiments of the present disclosure;
**Fig. 2** is a block diagram of an exemplary electronic device, consistent with embodiments of the present disclosure;
**Fig. 3** provides an exemplary analytic representation of data values and relationships, consistent with embodiments of the present disclosure;
**Fig. 4** provides an exemplary analytic representation of data values and relationships, consistent with embodiments of the present disclosure;
**Fig. 5** provides an exemplary analytic representation of data values and relationships, consistent with embodiments of the present disclosure;
**Fig. 6** provides an exemplary analytic representation of data values, geospatial data, and relationships, consistent with embodiments of the present disclosure;
**Fig. 7** provides an exemplary analytic representation of data values and relationships, consistent with embodiments of the present disclosure; and
**Fig. 8** is a flowchart of an exemplary method for analysis and visualization of related events and entities.

### DESCRIPTION OF EXEMPLARY EMBODIMENTS

Reference will now be made in detail to several exemplary embodiments of the present disclosure, including those illustrated in the accompanying drawings. Whenever possible, the same reference numbers will be used throughout the drawings to refer to the same or like parts.

Embodiments disclosed herein are directed, among other things, to systems and methods that allow the user to filter large amounts of data in a quick, logical, and visually associative way. More specifically, the systems and methods can, among other things, provide the ability to display information about events and entities both temporally and geographically. The systems and methods can, among other things, allow the user to zoom between a macro view of the representation of information to a detailed view displaying specific properties of entities and events. The systems and methods can, among other things, allow for the selection and grouping of different entities and events on the graphical representation.

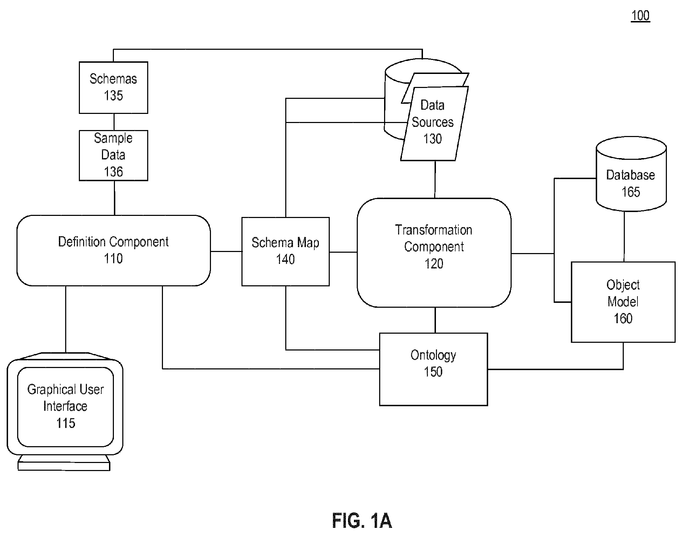

Figs. 1 A-1 B show, in block diagram form, an exemplary data fusion system, consistent with embodiments of the present disclosure, including an exemplary diagram of a resulting data model for the data fusion system consistent with embodiments of the present disclosure.

**Fig. 1A** shows, in block diagram form, an exemplary data fusion system 100, consistent with embodiments of the present disclosure. In some embodiments, data fusion system 100 can be a part of or communicatively coupled to electronic device 210. Among other things, system 100 can facilitate transformation of one or more data sources, such as data sources 130, into an object model 160, whose semantics are defined by an ontology 150. The transformation can be performed for a variety of reasons. For example, a database administrator can wish to import data from data sources 130 into a database 165 for persistently storing object model 160. As another example, a data presentation component (not depicted) can transform input data from data sources 130 "on the fly" into object model 160. Object model 160 can then be utilized, in conjunction with ontology 150, for analysis through graphs and/or other data visualization techniques.

In some embodiments data fusion system 100 includes an application programming interface ("API") providing a mechanism for developers and users to specify additional data sources 130 not previously convertible into object model 160. These APIs can further provide the ability to specify custom transformation components used to transform the data from custom data sources 130 into object model 160 in accordance with ontology 150. By providing these APIs, data fusion system 100 can extend to access a large variety of data and data sources not previously accessible. Further, the ability to extend the data sources available to data fusion system 100 can allow the system to remain current as new data formats are created or encountered.

System 100 comprises a definition component 110 and a translation component 120, both implemented by one or more processors on one or more computing devices executing hardware and/or software-based logic for providing various functionality described herein. As will be appreciated from the present disclosure, system 100 can comprise fewer or additional components that provide various functionalities described herein. Such components are, for clarity, omitted from **Fig. 1A****.** Moreover, the component(s) of system 100 responsible for providing various functionalities can further vary from embodiment to embodiment.

Definition component 110 generates and/or modifies ontology 150 and a schema map 140. Exemplary embodiments for defining an ontology (such as ontology 150) are described in U.S. 7,962,495 (the '495 Patent), issued June 14, 2011, the entire contents of which are expressly incorporated herein by reference. Among other things, the '495 patent describes embodiments that define a dynamic ontology for use in creating data in a database. For creating a database ontology, one or more object types are created where each object type can include one or more properties. The attributes of object types or property types of the ontology can be edited or modified at any time. And for each property type, at least one parser definition is created. The attributes of a parser definition can be edited or modified at any time.

In some embodiments, each property type is declared to be representative of one or more object types. A property type is representative of an object type when the property type is intuitively associated with the object type. For example, a property type of "Social Security Number" may be representative of an object type "Person" but not representative of an object type "Business."

In some embodiments, each property type has one or more components and a base type. In some embodiments, a property type may comprise a string, a date, a number, or a composite type consisting of two or more string, date, or number elements. Thus, property types are extensible and can represent complex data structures. Further, a parser definition can reference a component of a complex property type as a unit or token.

An example of a property having multiple components is a Name property having a Last Name component and a First Name component. An example of raw input data is "Smith, Jane." An example parser definition specifies an association of imported input data to object property components as follows: {LAST_NAME}, {FIRST_NAME}→Name:Last, Name:First. In some embodiments, the association {LAST_NAME}, {FIRST_NAME} is defined in a parser definition using regular expression symbology. The association {LAST_NAME}, {FIRST_NAME} indicates that a last name string followed by a first name string comprises valid input data for a property of type Name. In contrast, input data of "Smith Jane" would not be valid for the specified parser definition, but a user could create a second parser definition that does match input data of "Smith Jane." The definition Name:Last, Name:First specifies that matching input data values map to components named "Last" and "First" of the Name property.

As a result, parsing the input data using the parser definition results in assigning the value "Smith" to the Name:Last component of the Name property, and the value "Jane" to the Name:First component of the Name property.

Referring to **Fig. 1A**, schema map 140 can define how various elements of schemas 135 for data sources 130 map to various elements of ontology 150. Definition component 110 receives, calculates, extracts, or otherwise identifies schemas 135 for data sources 130. Schemas 135 define the structure of data sources 130-for example, the names and other characteristics of tables, files, columns, fields, properties, and so forth. Definition component 110 furthermore optionally identifies sample data 136 from data sources 130. Definition component 110 can further identify object type, relationship, and property definitions from ontology 150, if any already exist. Definition component 110 can further identify pre-existing mappings from schema map 140, if such mappings exist.

Based on the identified information, definition component 110 can generate a graphical interface 115. Graphical interface 115 can be presented to users of a computing device via any suitable output mechanism (e.g., a display screen, an image projection, etc.), and can further accept input from users of the computing device via any suitable input mechanism (e.g., a keyboard, a mouse, a touch screen interface). Graphical interface 115 features a visual workspace that visually depicts representations of the elements of ontology 150 for which mappings are defined in schema map 140. Graphical interface 115 also includes controls for adding new elements to schema map 140 and/or ontology 150, including objects, properties of objects, and relationships, via the visual workspace. After elements of ontology 150 are represented in the visual workspace, graphical interface 115 can further provide controls in association with the representations that allow for modifying the elements of ontology 150 and identifying how the elements of ontology 150 correspond to elements of schemas 135. Optionally, the graphical interface 115 can further utilize sample data 136 to provide the user with a preview of object model 160 as the user defines schema map 140. In response to the input via the various controls of graphical interface 115, definition component 110 can generate and/or modify ontology 150 and schema map 140.

In some embodiments, graphical interface 115 can provide an interface providing a user with the ability to add structure to an unstructured document stored in data sources 130 by tagging one or more portions (e.g., text) within the document. Defining tags and applying these tags to a portion of the document can create object, properties, or links creating a relationship between one or more objects and/or properties.

Transformation component 120 can be invoked after schema map 140 and ontology 150 have been defined or redefined. Transformation component 120 identifies schema map 140 and ontology 150. Transformation component 120 further reads data sources 130 and identifies schemas 135 for data sources 130. For each element of ontology 150 described in schema map 140, transformation component 120 iterates through some or all of the data items of data sources 130, generating elements of object model 160 in the manner specified by schema map 140. In some embodiments, transformation component 120 can store a representation of each generated element of object model 160 in a database 165. In some embodiments, transformation component 120 is further configured to synchronize changes in object model 160 back to data sources 130.

Data sources 130 can be one or more sources of data, including, without limitation, spreadsheet files, databases, email folders, document collections, media collections, contact directories, and so forth. Data sources 130 can include structured data (e.g., a database, a .csv file, or any tab delimited or fixed-width file), semi-structured data (e.g., an email, an email server, or forms such as a suspicious activity report or currency transaction report), or unstructured data (e.g., encoded files such as PDF, sound, and image files). Data sources 130 can include data structures stored persistently in non-volatile memory. Data sources 130 can also or alternatively include temporary data structures generated from underlying data sources via data extraction components, such as a result set returned from a database server executing a database query.

Schema map 140, ontology 150, and schemas 135 can be stored in any suitable data structure(s), such as XML files, database tables, and so forth. In some embodiments, ontology 150 is maintained persistently. Schema map 140 can or cannot be maintained persistently, depending on whether the transformation process is perpetual or a one-time event. Schemas 135 need not be maintained in persistent memory, but can be cached for optimization.

Object model 160 comprises collections of elements such as typed objects, properties, and relationships. The collections can be structured in any suitable manner. In some embodiments, a database 165 stores the elements of object model 160, or representations thereof. In some embodiments, the elements of object model 160 are stored within database 165 in a different underlying format, such as in a series of object, property, and relationship tables in a relational database.

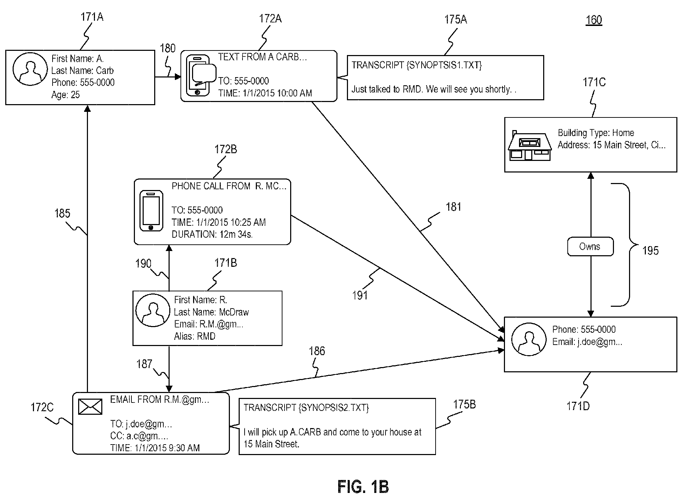

**Fig. 1** **B** is illustrative of an exemplary object model 160 and a corresponding ontology similar to ontology 150 in **Fig. 1A**. The elements of exemplary object model 160 can be stored in a database similar to database 165 in **Fig. 1A**.

Object model 160 can include, among other things, entities 171A-D and events 172A-C. Each entity 171 and event 172 can further contain properties including, without limitation, representative properties, base properties, or complex properties (e.g., transcript properties 175A-B) made up of multiple sub properties or components. In some embodiments, a name property on a person object (e.g., person object 171A, person object 171 B, or person object 171 D) can be split into a first name and a last name as previously disclosed. Complex properties can be used to provide detailed information about events. Text message event 172A can contain transcript property 175A. Transcript property 175A can contain the text of text message event 172A as well as additional properties such as, for example, the name of the transcript, the character count, read receipt information, and/or any attachments in the message. In some embodiments, the transcript property could be in an audio format or some other format instead of written. It is appreciated that many different formats can be commonly used and would be known to one of ordinary skill in the art that could replace a written or audio property.

Additionally, events and entities can contain notes and media. Notes can provide a container for textual information related to the event entity. Media can represent binary data associated with the events or entities. Media data can take the form of, for example, text documents, images, videos, or specialized formats.

In some embodiments, the content of transcript property 175A and 175B may be stored as a separate document object with its own properties and links to other event objects such as event object 172A and 172C. Document objects can contain the same properties, media, notes and links as other objects such as entity objects 171 and event objects 172. Document objects can provide a container for bodies of text as well as the ability to include properties and/or metadata about those documents.

Events, entities, and other objects can reference media data and properties of linked objects. Transcript properties 175A and 175B can include document media associated with event objects 172A and 172C. Person object 171 D can reference transcript 175A of event 172A because person object 171 D is linked by link 181 to event object 172A. In this way, the object model can use links to provide additional context to other objects based on relationships between the objects.

Additionally, both objects and properties can contain geospatial and temporal metadata. Geospatial metadata can provide a physical location associated with an object or property. For example, house 171C can contain an "ADDRESS" property which can be represented by a traditional postal address or can be represented by geospatial coordinates. It is appreciated that the geospatial data can also be in any form that represents a location and is understood by the users of object model 160. Temporal metadata can represent either a specific point in time or a duration having a start time and an end time. For example, text message event 172A and email event 172C can both contain a "TIME" property indicating a specific date and time when the message was sent. Additionally, for example, phone call event 172B can contain a "TIME" property indicating the start time and a "DURATION" property indicating the length of the phone call. In some embodiments duration can be indicated by including a start property and end property allowing calculation of the duration. The temporal data can be in any form (e.g., epoch time, UTC time, or local time) that represents the time of the event or the duration of the event. Moreover, in some embodiments, geospatial and temporal metadata can be correlated. For example, the geospatial and temporal metadata can correspond to one or more locations and times when a person visited those one or more locations.

The properties of entities 171 and events 172 can serve as links indicating relationships between the various objects. For example, a property of a person object (e.g., person object 171 D) such as "OWNER OF" can represent an ownership relationship (195) with another entity (e.g., home object 171C). In this example, the property defining person object 171 D as the owner of home object 171C also serves as a simple link between person object 171 D and home object 171C.

Events can represent complex links between objects. For example, email event 172C can contain "FROM," "TO," and "CC" properties. The "FROM" property links (187) person object 171 B to email event 172C. The "TO" property links (186) email event 172C to person object 171 D. The "CC" property links (185) email event 172C to person object 171A. Thus email event 172C, while still containing its own relevant properties (e.g., temporal properties, geospatial properties, and transcript property 175B), can act as a complex link between person object 171 B and person objects 171 A and 171 D.

Both simple and complex links can have a parent and child of the relationship. Person object 171 D is a parent of link 195 and home object 171 C is the child of link 195 representing the direction of the relationship. Person object 171A, by initiating (180) text message event 172A, is the parent of the complex link represented by 172A. Person object 171 D, the recipient (181) of text message event 172A, serves as the child of the complex link. A relationship can have multiple children. Email event 172C serving as a complex link, can have children person object 171 D and person object 171 A, the two recipients of email event 172C. As the author of email event 172C, person object 171 B is the parent of the complex link. Links where the parent and child relationship provides contextual information about the relationship are considered asymmetric links. In some embodiments, links can be symmetric having no inherent directional context. In these embodiments, there may still be a parent or child, but the actual role of each object or event is not relevant to the relationship.

Object model 160 can include entity objects, event objects, document objects, and links between the various objects. As stored, such as in a database, the object model can include this information in a raw form. While **Fig. 1B** is illustrative of the data and the relationships between the data, the object model itself can be void of any visual or analytic representations.

According to some embodiments, the operations, techniques, and/or components described herein can be implemented by an electronic device, which can include one or more special-purpose computing devices. The special-purpose computing devices can be hard-wired to perform the operations, techniques, and/or components described herein, or can include digital electronic devices such as one or more application-specific integrated circuits (ASICs) or field programmable gate arrays (FPGAs) that are persistently programmed to perform the operations, techniques and/or components described herein, or can include one or more hardware processors programmed to perform such features of the present disclosure pursuant to program instructions in firmware, memory, other storage, or a combination. Such special-purpose computing devices can also combine custom hard-wired logic, ASICs, or FPGAs with custom programming to accomplish the technique and other features of the present disclosure. The special-purpose computing devices can be desktop computer systems, portable computer systems, handheld devices, networking devices, or any other device that incorporates hard-wired and/or program logic to implement the techniques and other features of the present disclosure.

The one or more special-purpose computing devices can be generally controlled and coordinated by operating system software, such as iOS, Android, Blackberry, Chrome OS, OS X, Windows XP, Windows Vista, Windows 7, Windows 8, Windows Server, Windows CE, Unix, Linux, SunOS, Solaris, VxWorks, or other compatible operating systems. In other embodiments, the computing device can be controlled by a proprietary operating system. Operating systems control and schedule computer processes for execution, perform memory management, provide file system, networking, I/O services, and provide a user interface functionality, such as a graphical user interface ("GUI"), among other things.

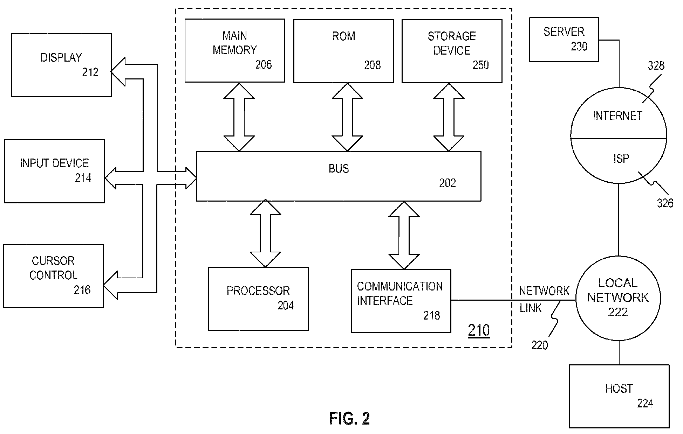

By way of example, **Fig. 2** is a block diagram that illustrates an implementation of an electronic device 210, which, as described above, can comprise one or more electronic devices. Electronic device 210 includes a bus 202 or other communication mechanism for communicating information, and one or more hardware processors 204, coupled with bus 202 for processing information. One or more hardware processors 204 can be, for example, one or more microprocessors.

Electronic device 210 also includes a main memory 206, such as a random access memory (RAM) or other dynamic storage device, coupled to bus 202 for storing information and instructions to be executed by processor 204. Main memory 206 also can be used for storing temporary variables or other intermediate information during execution of instructions to be executed by processor 204. Such instructions, when stored in non-transitory storage media accessible to one or more processors 204, render electronic device 210 into a special-purpose machine that is customized to perform the operations specified in the instructions.

Electronic device 210 further includes a read only memory (ROM) 208 or other static storage device coupled to bus 202 for storing static information and instructions for processor 204. A storage device 250, such as a magnetic disk, optical disk, or USB thumb drive (Flash drive), etc., is provided and coupled to bus 202 for storing information and instructions.

Electronic device 210 can be coupled via bus 202 to a display 212, such as a cathode ray tube (CRT), an LCD display, or a touchscreen, for displaying information to a computer user. An input device 214, including alphanumeric and other keys, is coupled to bus 202 for communicating information and command selections to processor 204. Another type of user input device is cursor control 216, such as a mouse, a trackball, or cursor direction keys for communicating direction information and command selections to processor 204 and for controlling cursor movement on display 212. The input device typically has two degrees of freedom in two axes, a first axis (for example, x) and a second axis (for example, y), that allows the device to specify positions in a plane. In some embodiments, the same direction information and command selections as cursor control may be implemented via receiving touches on a touch screen without a cursor.

Electronic device 210 can include a user interface module to implement a GUI that may be stored in a mass storage device as executable software codes that are executed by the one or more computing devices. This and other modules may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables.

In general, the word "module," as used herein, refers to logic embodied in hardware or firmware, or to a collection of software instructions, possibly having entry and exit points, written in a programming language, such as, for example, Java, Lua, C, and C++. A software module can be compiled and linked into an executable program, installed in a dynamic link library, or written in an interpreted programming language such as, for example, BASIC, Perl, Python, or Pig. It will be appreciated that software modules can be callable from other modules or from themselves, and/or can be invoked in response to detected events or interrupts. Software modules configured for execution on computing devices can be provided on a computer readable medium, such as a compact disc, digital video disc, flash drive, magnetic disc, or any other tangible medium, or as a digital download (and can be originally stored in a compressed or installable format that requires installation, decompression, or decryption prior to execution). Such software code can be stored, partially or fully, on a memory device of the executing computing device, for execution by the computing device. Software instructions can be embedded in firmware, such as an EPROM. It will be further appreciated that hardware modules can be comprised of connected logic units, such as gates and flip-flops, and/or can be comprised of programmable units, such as programmable gate arrays or processors. The modules or computing device functionality described herein are preferably implemented as software modules, but can be represented in hardware or firmware. Generally, the modules described herein refer to logical modules that may be combined with other modules or divided into sub-modules despite their physical organization or storage.

Electronic device 210 can implement the techniques and other features described herein using customized hard-wired logic, one or more ASICs or FPGAs, firmware and/or program logic which in combination with the electronic device causes or programs electronic device 210 to be a special-purpose machine. According to some embodiments, the techniques and other features described herein are performed by electronic device 210 in response to one or more processors 204 executing one or more sequences of one or more instructions contained in main memory 206. Such instructions can be read into main memory 206 from another storage medium, such as storage device 250. Execution of the sequences of instructions contained in main memory 206 causes processor 204 to perform the process steps described herein. In alternative embodiments, hard-wired circuitry can be used in place of or in combination with software instructions.

The term "non-transitory media" as used herein refers to any media storing data and/or instructions that cause a machine to operate in a specific fashion. Such non-transitory media can comprise non-volatile media and/or volatile media. Nonvolatile media includes, for example, optical or magnetic disks, such as storage device 250. Volatile media includes dynamic memory, such as main memory 206. Common forms of non-transitory media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM or any other flash memory, NVRAM, a cache, a register, any other memory chip or cartridge, and networked versions of the same.

Non-transitory media is distinct from, but can be used in conjunction with, transmission media. Transmission media participates in transferring information between storage media. For example, transmission media includes coaxial cables, copper wire and fiber optics, including the wires that comprise bus 202. Transmission media can also take the form of acoustic or light waves, such as those generated during radio-wave and infra-red data communications.

Various forms of media can be involved in carrying one or more sequences of one or more instructions to processor 204 for execution. For example, the instructions can initially be carried on a magnetic disk or solid state drive of a remote computer. The remote computer can load the instructions into its dynamic memory and send the instructions over a telephone line using a modem. A modem local to electronic device 210 can receive the data on the telephone line and use an infra-red transmitter to convert the data to an infra-red signal. An infra-red detector can receive the data carried in the infra-red signal and appropriate circuitry can place the data on bus 202. Bus 202 carries the data to main memory 206, from which processor 204 retrieves and executes the instructions. The instructions received by main memory 206 can optionally be stored on storage device 250 either before or after execution by processor 204.

Electronic device 210 also includes a communication interface 218 coupled to bus 202. Communication interface 218 provides a two-way data communication coupling to a network link 220 that is connected to a local network 222. For example, communication interface 218 can be an integrated services digital network (ISDN) card, cable modem, satellite modem, or a modem to provide a data communication connection to a corresponding type of telephone line. As another example, communication interface 218 can be a local area network (LAN) card to provide a data communication connection to a compatible LAN. Wireless links can also be implemented. In any such implementation, communication interface 218 sends and receives electrical, electromagnetic or optical signals that carry digital data streams representing various types of information.

Network link 220 typically provides data communication through one or more networks to other data devices. For example, network link 220 can provide a connection through local network 222 to a host computer 224 or to data equipment operated by an Internet Service Provider (ISP) 226. ISP 226 in turn provides data communication services through the world wide packet data communication network now commonly referred to as the "Internet" 228. Local network 222 and Internet 228 both use electrical, electromagnetic or optical signals that carry digital data streams. The signals through the various networks and the signals on network link 220 and through communication interface 218, which carry the digital data to and from electronic device 210, are example forms of transmission media.

Electronic device 210 can send messages and receive data, including program code, through the network(s), network link 220 and communication interface 218. In the Internet example, a server 230 might transmit a requested code for an application program through Internet 228, ISP 226, local network 222 and communication interface 218.

The received code can be executed by processor 204 as it is received, and/or stored in storage device 250, or other non-volatile storage for later execution.

According to some embodiments, the operations, techniques, and/or components described herein can be performed by a client application (e.g., a web browser, a plug-in to a web browser, a standalone executable application, etc.) running on a client device, by a server (e.g., a web server), or it can have some steps or parts thereof executed on the client device and some steps or parts thereof executed on the server. Thus, some embodiments can be performed by one or more electronic devices such as electronic device 210. While the embodiments described herein can be performed by multiple electronic devices each having one or more processors, for purposes of simplicity and without limitation, these embodiments will be explained with respect to a single electronic device (e.g., electronic device 210).

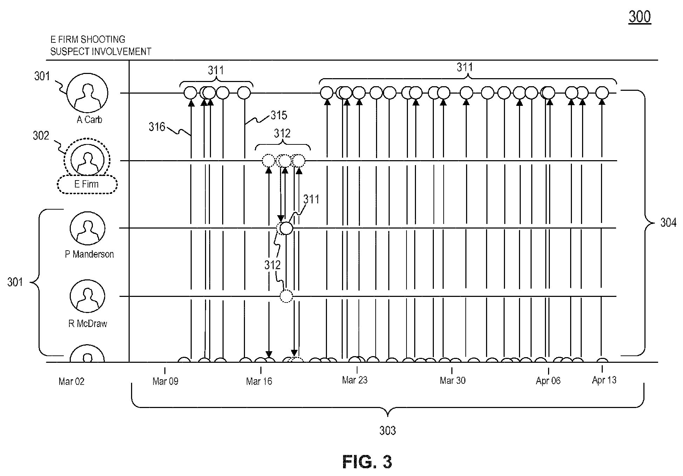

Figs. 3-6 are exemplary analytic representations of an object model similar to object model 160 in **Fig. 1B****.** Each of these exemplary analytic representations demonstrates various aspects and features of embodiments consistent with the present disclosure. Moreover, these exemplary analytic representations can be part of the same system at different zoom and detail levels. For example, as a user modifies the zoom level of the system, the different exemplary analytic representations can be presented.

The ability to change zoom levels applies to both the entity portions (e.g., entity objects 301, 302, 401, 402, 501, and 601) and the event portions (e.g., event objects 311. 312, 411, 412. 510, 512, 515, 517, 610, 611, 612 , 613, and 614) of the exemplary analytic representations. Further, in some embodiments, the zoom level of the event and entity portions of the exemplary analytical representations can be modified independently. In some embodiments, individual events have different zoom levels from other events in the analytic representation. Accordingly, the exemplary analytical representations provided in the present disclosure represent snapshots of various zoom levels consistent with the present disclosure and occurring on a continuous spectrum of zoom levels. The provided exemplary analytic representations do not limit the disclosure to only those exemplary analytic representations explicitly described. Embodiments consistent with the present disclosure can include additional zoom levels and various combinations of zoom levels containing a variety of the exemplary features.

**Fig. 3** is an exemplary analytic representation 300 of an object model similar to object model 160 in **Fig. 1B**, consistent with embodiments of the present disclosure. Analytical representation 300 of the object model can provide a logical view of relationships and patterns in the object model difficult to discern from the data alone. Analytic representation 300 can provide for analysis of an object model on a multidimensional plane representing entities, events, and relationships both temporally and geospatially. Analytic representation 300 can be displayed on a GUI (e.g., graphical interface 115) or any other device capable of displaying a graphical interface. A user can view and interact with analytical representation 300. Further, analytic representation 300 can be stored in main memory (e.g., memory similar to main memory 206 in **Fig. 2**), on a storage device (e.g., a storage device similar to storage device 250 in **Fig. 2**), or on a non-transitory media.

As illustrated in **Fig. 3**, analytic representation 300 can display logical information about relationships between a group of entity objects and event objects over time. Entity objects (e.g., entity objects 301 and entity object 302) can be displayed on a side portion of the representation. Analytic representation 300 can also include lines extended horizontally from each entity object (e.g., entity 301 and 302) providing an individualized timeline 304 for each entity that spans time period 303.

On the entity timelines 304, analytic representation 300 can indicate the occurrence of an event (e.g., event objects 311 and event objects 312) at the corresponding time an event occurred for an entity. Event objects 311 and event objects 312 can be designated on the timeline by a shape, icon, or some other visual indicator. For example, analytic representation 300 can place a circle on the timeline for each event corresponding to one of the entities. It is appreciated that the designation may include anything that represents the occurrence of the event on the corresponding entity timeline 304.

Events (e.g., events 311 and 312) can include links to other events. These links can represent relationships existing because of the nature of the event. The links provided by events can be represented by lines (e.g., link 315) or arrows (e.g., link 316) and can link events on different entity timelines 304. The use of a plain line (e.g., link 315) can indicate that the link is symmetric having no directional context.

Instead of a line, the event objects can be connected with an arrow (e.g., link 316). An arrow can indicate an asymmetric relationship between two entities having contextual significance. The direction of arrow 316 can indicate the direction of the relationship between the linked entity objects. For example, one entity may place a phone call to another entity. In this example, the phone call event can appear on the timeline for both entities with an arrow beginning at the event for the entity placing the call and terminating at the event corresponding to the entity receiving the call. In this example, the phone call event can appear on both entity timelines to indicate the participants of the call and the arrow connecting the events can provide contextual information about which entity placed the call and which entity received the call.

Because events may include multiple entities, an event can have multiple links and appear on multiple entity timelines. An event object representing, for example, a conference call may link multiple person objects (e.g. person objects 171). As a result, the phone call event can appear on the timeline of each person object involved in the call, and multiple arrows can link the event on a timeline with the occurrence of that event on the timelines associated with the parties involved in the phone call.

Analytic representation 300 can further provide a graphical indication of events occurring over a duration of time. When an event with a link occurs for a time period, analytic representation 300 can represent the link (e.g., link 315 or link 316) with a thick line to indicate the duration. The thickness of graphical representation of the link can represent the duration of the event connecting the entities. For example, a short phone call can be represented by an arrow connecting the initiator of the phone call with the recipient. In this example, the arrow can be thicker than an arrow for a text message event. Further in this example, a long phone call can be represented using an arrow that is thicker than the arrow used to represent the short phone call. The thickness of the arrow can directly correspond to the time duration of the event relative to time period 303, or the thickness of the links can provide a representation of the relative durations of the displayed events.

In some embodiments, the duration of an event can be represented by a visually distinguishable mark or feature on the event representation itself. For example, an event can have a thick border where the thickness of the border relates to the duration of the represented event. In some embodiments, an event can have a thick or visually distinguishable line extending horizontally from the event representation along the entity timeline where the length of the line corresponds to the event duration relative to timeline 303. Accordingly, analytical representation 300 can provide a mechanism for discerning the duration of events without a need to inspect the details of each event.

Analytic representation 300 can allow for direct visualization of a specific entity object and its associated events. An entity can be selected (e.g., entity 302). After entity 302 is selected, analytic representation can update the events 312 and can update the links 315 and 316 displayed on timelines 304 for every event having a link to an event associated with entity 302. The updated display can represent entity 302 and events 312 with a selection indicator to show which entity and events are selected. In some embodiments, the updated representation can use highlighting or varying color as a selection indicator for events 312 and entity 302. In some embodiments, the updated representation can use dashed outlines as the selection indicator. In some embodiments, analytic representation 300 can use different colors, highlighting, or other mechanisms as selection indicators to show the selected entities, events, and links. After a new entity or group of entities is selected, analytic representation 300 can automatically find related events, links, and entities, and update the representation accordingly based on the newly provided selection. In some embodiments, multiple entities and the related events can be selected at the same time and can be displayed with the same or different selection indicator.

Analytic representation 300 can also provide the ability to group entities 301 and 302. Multiple entities can be grouped causing analytic representation 300 to treat them as one entity. When entities are grouped, analytic representation 300 can display all of the events associated with the grouped entities on a single timeline. In some embodiments, instead of condensing all events onto a single grouped timeline, analytic representation 300 can leave the events visually separate but join the events behaviorally. For example, selecting one entity from the group can cause the entire group to be selected instead of the single entity. Further, analytical representation can use selection indicators for every element of the group to indicate when the group is selected.

In some embodiments, grouping can be done based on the type of the event or entity. Types can be based on properties of the objects or other defined criteria. For example, all events that represent emails can be grouped into an email category. Categories can be further refined based on multiple properties. In the email example, the email category could be further divided into emails involving a preselected group of individuals. Accordingly, all emails not matching that criteria can be in a second group which can then be hidden or filtered. In this way, analytic representation 300 can group relevant data or data matching specific criteria to allow clear analysis of the data stored in the underlying object model (e.g., object model 160). Grouping can rely on any attributes available in the object model.

In addition to providing a real-time, interactive representation of the underlying object model to a user of the system, analytic representation 300 can provide later access to a previously viewed state of the representation. In some embodiments, analytic representation 300 can allow a specific representation to be exported in a graphics file to facilitate sharing or later viewing. For example, analytic representation 300 can export a specific representation view in a graphics format such as Scalable Vector Graphics format. A user can later share the file facilitating saving, sharing, and post-processing of a specific instant of analytical representation 300. In some embodiments analytic representation 300 can allow exportation in a variety of common graphics and/or document formats (e.g., Joint Photographic Experts Group format, Portable Network Graphics format, Targa format, Graphics Interchange Format, Windows Bitmap format, Tagged Image File Format, and/or Portable Document Format).

Analytic representation 300 can also present additional data not stored as part of object model 160 in database 165. A user can indicate the location of the additional data. In some embodiments, the analytic representation 300 can receive a unique resource locator that identifies the location of the additional data. In some embodiments, analytic reperesentation 300 can accept a file or location via drag and drop. After identifying the location of the external data, analytic representation can verify that the data is in a format consistent with object model 160 before presenting the additional data to the user. Accordingly, analytic representation can allow compatible external data sources to provide additional data to the user allowing for the dynamic addition of additional data available from those data sources. With additional data available, analytic representation 300 can provide improved analytical capabilities and connections between events and/or entities.

To further assist with analysis, analytic representation 300 can provide an ability to name the representation provided by analytic representation 300. At the direction of the user, analytic representation 300 can provide a dialog box where a user can enter a name, description, and/or other information that can be used to further identify and/or classify the information provided by analytic representation 300. This can assist users sharing particular instances of analytic representation 300 by providing context to other users of the system.

Analytic representation 300 can also provide a Universal Resource Identifier ("URI") linked to a specific instant of the representation. The URI can be used by another user to load the analytical representation 300 that created the URI. Thus, the URI can provide a way to save a specific state of the representation for use at a later time. Unlike sharing an exported graphic, after the URI is loaded, analytical representation 300 can allow a user to continue interacting with the representation to perform further analysis.

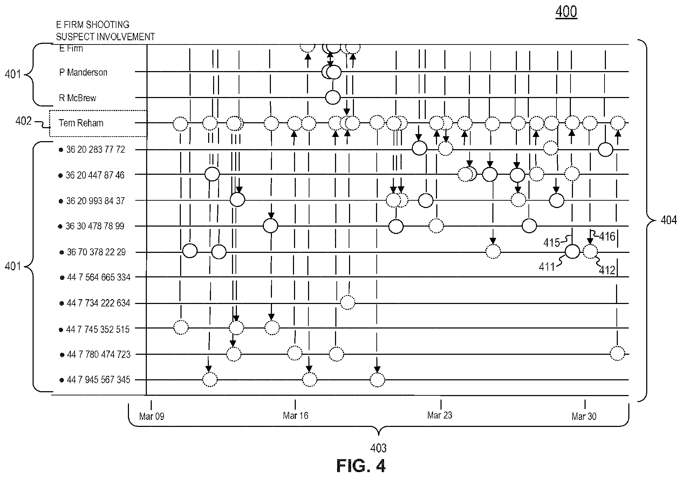

**Fig. 4** is an analytic representation 400 of an object model similar to object model 160 in **Fig. 1B**, consistent with embodiments of the present disclosure. Analytic representation 400 can represent entities (e.g., entities 401 and 402), events (e.g., events 411 and 412) and relationships (e.g., links 415 and 416) allowing analysis of events and relationships between entities. Entities 401 and 402, events 411 and 412, and links 415 and 416 can be similar to entities 301 and 302, events 311 and 312, and links 315 and 316 respectively in analytic representation 300 in **Fig. 3**. Analytic representation 400 can provide these elements in a macro representation allowing for the representation of a larger number of data elements than available in some other embodiments. Also analytic representation 400 can include the same functionality as analytic representation 300.

As shown in **Fig. 4**, visual representations for entities 401 and entities 402 can be condensed requiring decreased vertical space. In some embodiments, analytical representation 400 can remove icons associated with the entities 401 and 402, or use smaller icons to preserve vertical space. Accordingly, analytic representation 400 can display more entities than when larger icons or indicators are used to represent the entities. Analytic representation 400 can represent entities 401 and 402 by a property of the entity. For example, each entity can be represented by a phone number, an email address, a nickname, or any other property contained in the entity. In some embodiments, entities can be represented by different properties. In these embodiments, for example, some entities may be represented by a phone number, some entities may be represented by an email address, and some entities may be represented by a social security number. The components making up analytic representation 400 can be similar to analytic representation 300. For example, analytic representation 400 can use timelines 404 for each entity and can display events occurring over time period 403. Further, analytic representation 400 can indicate events (e.g., events 411 and 412) and links (e.g., links 415 and 416) occurring on the timelines 404.

Analytic representation 400 can reveal temporally based patterns occurring in large datasets. With more events (e.g., events 411 and 412) placed on the timelines 404, analytic representation 400 can display more links (e.g., links 415 and 416) between entities revealing clusters, abnormalities, behavioral changes, atypical relationships, trends, or other analytic patterns. For example, analytic representation 400 can reveal a cluster of phone calls between two individuals occurring only around the time of a crime and at no other time. In another example, analytic representation 400 can reveal a gradually increasing number of meetings between individuals over a period of time. Alternatively, for example, analytic representation 400 can reveal that an individual abruptly stopped shopping at one store in favor of another. Analytic representation 400 can reveal these patterns by displaying larger amounts of the underlying object model and providing a mechanism for isolating subsections of that data with selection indicators. While recognizing patterns is possible with smaller amounts of data such as is represented in analytical representation 400, having more data can make the patterns more readily apparent.

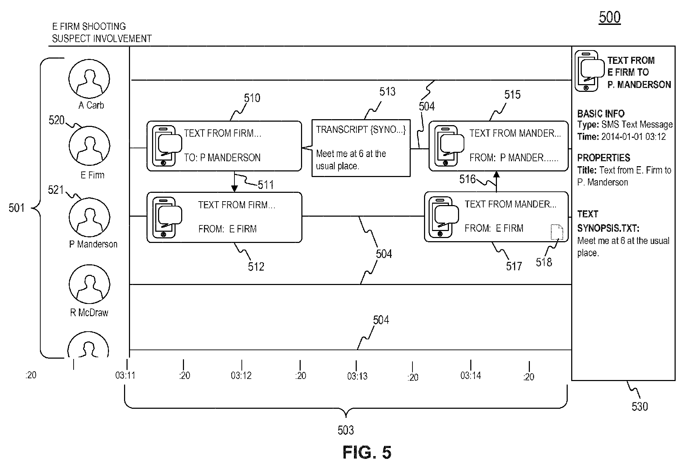

**Fig. 5** is an exemplary analytic representation 500 of an object model, similar to object model 160 in **Fig. 1B**, consistent with embodiments of the present disclosure. Analytic representation 500 can represent entities (e.g., entities 501), events (e.g., events 510, 512, 515, and 517) and relationships (e.g., links 511 and 516) allowing analysis of events and relationships between entities. Entities 501, events 510, 512, 515, and 517, and links 511 and 516 can be similar to entities 301 and 302, events 311 and 312, and links 315 and 316 respectively in analytic representation 300 in **Fig. 3**. Analytic representation 500 can use these same elements representing fewer entities and events overall but providing a detailed representation showing specific information about each entity or event represented. Also, analytic representation 500 can include the same functionality as analytic representation 300.

As shown in **Fig. 5**, events can be represented by elements that can visually and textually describe or identify the event. Analytic representation 500 can show event 510 on the timeline of entity 520. Event 510 (e.g., a detailed representation of one of the similar events 311 or 312 of **Fig. 3**) can display an icon indicating the type of event, as well as a title, and properties on the event. For example, the icon and text represented on event 510 can indicate that the event is a text message. Further, the "TO" property, on the representation of event 510, can textually indicate recipients of the event. In some embodiments, the information displayed on the event object can be any data or property of the underlying data object. By displaying some details and properties on the event itself, analytic representation 500 can provide relevant analytical information to the user without requiring the user to individually inspect the details of each event.

Analytic representation 500 can represent relationships or links between events on the entity timelines 504. For example, event 512 on the timeline 504 of entity 521 can represent the reception of a text message. Analytic representation 500 can display a "FROM" property on event 512 indicating that entity 520 is the sender. Similarly, analytic representation 500 can display a "TO" property on event 510 textually indicating that entity 521 is the recipient. Analytic representation 500 can also display a link 511 represented by an arrow starting at event 510 and terminating at event 512. The direction of link 511 combined with the context of events 510 and 512 indicate that the link represents the sending of a text message from entity 520 to entity 521.

Analytic representation 500 can further provide detailed information about a specific event. For example, analytic representation 500 can display transcript 513. In addition to displaying transcript 513, analytic representation 500 can provide visual indicators when additional information, such as transcript 513, is available. Analytic representation 500 can provide a visual indicator 518 on events containing the additional information. Visual indicator 518 can, for example, represent a document, an audio attachment, a video, or any other type of data linked to the event or entity. By using a small visual indicator, analytic representation 500 can indicate not only the availability of additional contextual information, but also the format of that information.

Transcript 513 can be linked to event 510 (e.g., as a property of event 510) and can provide additional contextual information about the linked event. For example, transcript 513 can contain the content of the text message sent from entity 520 to entity 521. By providing detailed information about events, analytic representation 500 can provide context or additional information to unrelated events. For example, transcript 513 can state, "Meet me at 6 at the usual place." In this example, there can be a later event indicating a sighting of one of the parties at a location. In this example, events 510, 512, and a later sighting event can be contextually linked through the content provided by transcript 513, even though no direct link exists between those events. In this example, transcript 513 can reveal an inferential link not directly represented by the underlying object model. It is appreciated that the representation of additional contextual event information (e.g., transcript 513) is dependent on the nature of the underlying data. Data linked to an event can take the form of, for example, a text document, images, videos, specialized data formats, free text data, raw binary data, or any other form of data.

Analytic representation 500 can provide information about additional events occurring over time. In addition to representing text message events 510 and 511, analytic representation can further represent a later event (e.g., text message events 517 and 515). For example, events 515 and 517 when combined with textually represented properties and link 516 can indicate a later text message from entity 521 sent to entity 520. In this example, the text message events 515 and 517 can provide an inferential basis of a response. Because of the placement of events and links on the timelines 504, events 510, 512, 515, and 517, when taken as a whole, can represent a message and response occurring over the time period 503. Analytic representation 500 not only represents the relationship between entities based on events on their timelines, but also provides enough detail to form contextual inferences from the content of the events and the direction of the event links.

Additionally, analytic representation can provide an inspector (e.g., inspector 530) that can display additional details about a selected entity that would not otherwise be available on the main representation. Selecting text message event 510 can reveal inspector 530. Inspector 530 can provide detailed information about the properties and characteristics of the selected event. This can include both direct properties as well as linked properties or objects such as documents. For example, when selecting text message event 510, inspector 530 can show the type of event, the time, the title, and the associated transcript. Similarly, if transcript 513 was an object, inspector 530 could include a reference to that object. In some embodiments, the user can direct analytic representation 500 to hide or show inspector 530 on demand.

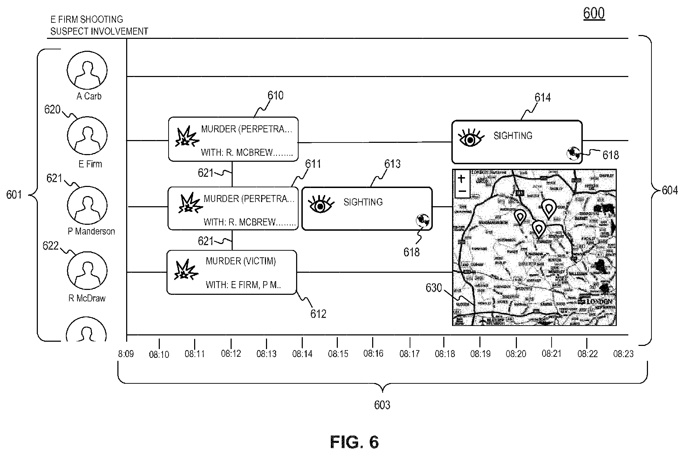

**Fig. 6** is an exemplary analytic representation 600 of an object model similar to object model 160 in **Fig. 1B**, consistent with embodiments of the present disclosure. Analytic representation 600 can represent entities (e.g., entities 601), events (e.g., events 610, 611, 612, 613 and 614) and relationships (e.g., links 621) of events and relationships between entities. Entities 601; events 610, 611, 612, 613, and 614; and links 621 can be similar to entities 301 and 302, events 311 and 312, and links 315 and 316 in analytic representation 300 in **Fig. 3**. Analytic representation 600 can use these same elements representing fewer entities and events overall but can provide more detailed information about each entity or event represented. Also, analytic representation 600 can include the same functionality as analytic representation 300, analytic representation 400, and analytic representation 500. Analytic representation 600 can further display a graphical representation of a map (e.g., map 630). Analytic representation 600 can use map 630 to display geospatial information associated with each of the events. In placing events on map 630, analytic representation 600 can reveal spatial relationships not readily apparent from analyzing the underlying object model.

Analytic representation 600 can represent multiple related and unrelated events on the timelines 604. For example, analytic representation 600 represents events 610, 611, and 612 which are related by link 621. Events 610, 611, and 612 further relate their associated entities 620, 621, and 622. The textual detail on events 610, 611, and 612 can provide further context about the relationship between the events and the entities. For example, events 610, 611, and 612 represent a murder. In this example, the textual detail indicates that events 610 and 611 represent the perpetrators, entities 620 and 621 respectively. Further, in this example, the textual detail of event 612 indicates that entity 622 is the victim.

Analytic representation 600 can represent events that are not directly related but have geographically similar properties. For example, event 613, a sighting, indicates that someone reported seeing entity 621 just after murder event. Further, for example, analytic representation 600 can represent a sighting 614 of entity 620 occurring after the murder event 610 and subsequent sighting 613. Analytic representation 600 can place visual indicators 618 on sightings 613 and 614 to represent that these events contain geospatial data. Visual indicators 618 can represent which entities are capable of being displayed on map 630.

Although sighting 613 and 614 can be temporally unrelated and not directly related to murder events 610 and 611, analytic representation 600 can place events on map 630 using location indicators and revealing geospatial relationships. Location indicators can be any visual indication of the location of an event on map 630. For example, analytical representation 600 can use a pin or flag as a location indicator. Once placed on map 630, analytic representation 600 can show the proximity of murder events 610, 611, 612, and sighting events 613 and 614. Analytic representation can reveal the geospatial proximity of events not readily apparent from the underlying data alone.

Map 630 can be interactive allowing the user to pan and zoom to reveal additional events or hide existing events on map 630. Further, different event placements on map 630 can lead to different conclusions and inferences depending on the type of the events, the temporal relationships, and the direct relationships of the parties. Using map 630, analytic representation 600 can provide a view of these relationships in a concise and easily discernible representation.

In addition to map 630, other analytic tools can be included in analytic representation 600. Analytic representation 600 can provide a framework for accessing data stored as part of the object model (e.g., object model 160). This framework can allow for custom inspectors or widgets, similar to map 630 or inspector 530 disclosed in **Fig. 5**, to provide further analytic visualization of the represented data. These custom inspectors or widgets can use the framework to direct analytic representation 600 to present the information in different ways. Analytic representation 600, by allowing access to the already processed and represented data, can facilitate implementation of additional representations of that data.

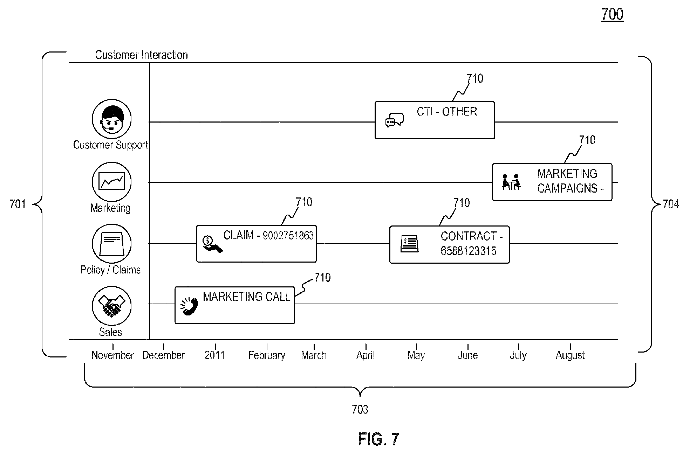

**Fig. 7** is an exemplary analytic representation 700 of an object model similar to object model 160 in **Fig. 1B**, consistent with embodiments of the present disclosure. Analytic representation 700 can represent categorized entities (e.g., categories 701), and events (e.g., events 710). Events 710 can be similar to events 311 and 312 in analytic representation 300 in **Fig. 3**. Analytic representation 700 can use these same elements representing related events having common entities grouped into a category. Also, analytic representation 700 can include the same functionality as analytic representation 300, analytic representation 400, analytic representation 500, and/or analytic representation 600.

Instead of displaying information and timelines for specific entities, analytic representation 700 can display information and timelines for various categories (e.g., categories 701). Categories 701 can combine events into logical groups based on any property or combination of properties available in object model 160. For example, analytic representation 700 can represent all events 710 involving interaction with a customer. In this example, categories 701 can represent internal departments (e.g., a customer support, marketing, policy/claims, or sales department) responsible for the interaction with the customer. After a set of events are combined into a category, analytic representation 700 can provide a representation of the category (e.g., categories 701) on the display. Each category of categories 701 can have a corresponding timeline 704. Analytic representation 700 can place all events (e.g., events 710) associated with a category of categories 701 on that category's corresponding timeline. By allowing the grouping of events into categories, analytic representation can provide an additional mechanism for analyzing trends and patterns related to the events. Further, analytic representation 700 can provide analysis where some or all of the events are not associated with an entity by allowing for the presentation of those events outside of an entity context.

In some embodiments, categories 701 can represent entities grouped into a category based on a property or attribute of the entities. In these examples, events 710 on a specific category timeline would correspond to all events associated with the entities in a particular category. By grouping multiple entities into a category, analytic representation 700 may reveal patterns, trends, and/or other relationships associated with a category that would not be readily apparent from analyzing each entity in a category 701 individually.

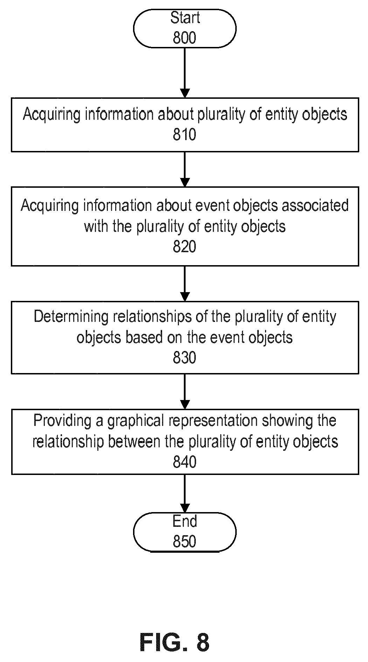

**Fig. 8** is a flowchart of an exemplary method for analysis and visualization of related events and entities. It will be readily appreciated that the illustrated procedure can be altered to delete steps or further include additional steps. After initial step 800, an analytic representation (e.g., analytic representation 300, 400, 500, 600, or 700) can acquire information about a plurality of entity objects. In some embodiments the acquisition of information can be guided by a user of the analytic representation. In some embodiments the acquisition of information can be based on an automated system or programmed set of instructions provided by the users of the analytic representation. The information acquired by the analytic representation can be a subset of the total amount of available information, Further the analytic representation can acquire more information than can be immediately represented because of limiting factors such as time period (e.g., time period 303, 403, 503, 603, and/or 703) to be displayed. Moreover, in some embodiments, the acquisition of information can be based on both user input and the automated system. For example, a user of the system can identify a person as a suspect of a murder occurring on a particular date and the system can then automatically acquire information related to that person and event

After acquiring information about entity objects, the analytic representation can acquire information about event objects associated with the plurality of entity objects (step 820). Each entity object can have multiple events associated with it. Each of those events can have additional properties (e.g., transcript 513), links (e.g., links 315 and 316, 415 and 416, 511 and 516, and/or 621), or other data that is associated with the event. After the entity objects are acquired, all of the relevant events and their related data can be acquired for use by the analytic representation. Similar to entity objects, the information about the event objects can include more information than can be represented on a specific representation because of limiting factors such as the displayed time period (e.g., time period 303, 403, 503, 603 and/or 703) or level of detail.

After the analytic representation has acquired entity information (step 810) and acquired event information (step 820) related to the acquired entities, the analytic representation can parse the information, identifying relevant relationships (step 830) between the entities based on the associated events. Similarly to entities and events, the analytic representation may have more relationship information than can be represented on a specific representation because of limiting factors such as the displayed time period (e.g., time period 303, 403, 503, 603, and/or 703) or the grouping of entities represented.

After the analytic representation acquires the entity information (step 810), acquires the associated event information (step 820) and determines relevant relationships between the entities based on the events (step 830), the analytic representation can be graphically displayed (step 840). The underlying data can represent more information than analytic representation can adequately display on a GUI (e.g., graphical interface 115)

Time periods (e.g., time period 303, 403, 503, 603, and/or 703), the relevant entities (e.g., entities 301, 401, 501, 601, and/or 701), and the level of detail can filter the acquired information and determined relationships, allowing only a subset of the representation of object model (e.g., object model 160) to be displayed. The user of the analytic representation can direct the system to adjust these parameters revealing various levels of detail and various amounts of the underlying represented data. The analytic representation can, by adjusting the displayed representation, allow the user to focus on relevant information and display different views of the same underlying data.

Increasing the zoom level can cause the analytic representation to display more detail (e.g., similar to analytic representation 500 and/or 600) about each event (e.g., transcript 513 or textual representations of event properties) at the expense of filtering out events no longer falling within the zoomed time period (e.g., time period 503, and/or 603). Conversely, decreasing the zoom level can cause the analytic representation to display less detail (e.g., analytic representation 400) about each event but provide the ability to graphically represent more events at one time than possible in the detailed view. Additionally, the analytic representation can graphically display intermediate zoom levels (e.g., analytic representation 300) providing a user directed balance between the level of detail and the amount of the acquired information represented on the graphical interface.

In addition to modifying the zoom levels, the analytic representation can allow for adjustment of the timeline and displayed entities. The analytic representation can filter through the acquired data displaying only the events matching the displayed entities and occurring within the displayed time period (e.g., time period 303, 403, 503, and/or 603). As the time period changes, the analytic representation can update which acquired data is filtered and which acquired data is represented based on the updated time period. Once updated, the analytical representation can display the updated representation to the user (e.g., on graphical interface 115)

Further, the analytic representation can respond to changes in the displayed entities. As a user scrolls the entities or selects different entities to be displayed, the analytic representation can update which entities and events are filtered and which acquired entities and events are graphically represented on the graphical display (e.g., graphical interface 115). In some embodiments, the analytic representation can present additional information as it becomes available in the data model (e.g., object model 160). The data fusion system (e.g. data fusion system 100) can constantly or intermittently process new data for updating the object model and making new information available to the analytic representation. The analytic representation can then add this new information to the visual representation. In some embodiments specific events and entities are removed and added either through manual or automated processes.

Providing the graphical representation (step 840) can include displaying a map (e.g., map 630) showing the location of the represented events. The analytic representation (e.g., analytic representation 600) can update map 630 every time the representation is modified. Whenever zoom levels are changed, the entities are scrolled, or the time period is adjusted, the analytic representation can filter the events to be displayed from the underlying acquired data and place those events on the map using location indicators. The map can further be a fully interactive element allowing the user of the analytic representation to select events based on their location and further analyze the data.
Embodiments of the present disclosure have been described herein with reference to numerous specific details that can vary from implementation to implementation. Certain adaptations and modifications of the described embodiments can be made. Other embodiments can be apparent to those skilled in the art from consideration of the specification and practice of the embodiments disclosed herein. It is intended that the specification and examples be considered as exemplary only, with a true scope of the present disclosure being indicated by the following claims. It is also intended that the sequence of steps shown in figures are only for illustrative purposes and are not intended to be limited to any particular sequence of steps. As such, it is appreciated that these steps can be performed in a different order while implementing the exemplary methods or processes disclosed herein.

## Claims

1. An electronic device comprising:
one or more computer-readable storage media configured to store instructions;
and
one or more processors configured to execute the instructions to cause the electronic device to:
acquire information about a plurality of entities associated with an object model;
acquire information about a plurality of events associated with the plurality of entities, wherein at least some of the plurality of events include temporal information of the entities;
evaluate relationships of the entities using the information about the plurality of events; and
generate a representation of the relationships of the entities using the temporal information.

2. The electronic device of claim 1, wherein the one or more processors are further configured to:
receive user input; and
update the representation in response to the user input.

3. The electronic device of claim 1 or 2, wherein the representation includes a plurality of timelines wherein a first entity of the plurality of entities corresponds to a first timeline of the plurality of timelines and a second entity of the plurality of entities corresponds to a second timeline of the plurality of timelines.

4. The electronic device of claim 3, wherein the representation includes a first event of the plurality of events placed on the first timeline, wherein the first event corresponds to the first entity.

5. The electronic device of claim 4, wherein:
the first event is placed on the second timeline based on the first event corresponding to the second entity; and
the first event placed on the first timeline is connected to the first event placed on the second timeline.

6. The electronic device of any preceding claim, wherein the representation includes information about at least one property associated with at least one event of the plurality of events.

7. The electronic device of any preceding claim, wherein the representation includes a selection indicator on at least one of the plurality of events or on at least one of the plurality of entities.

8. The electronic device of any preceding claim, wherein the representation includes a map displaying location information about at least one object of the object model, wherein the at least one object corresponds to at least one entity of the plurality of entities or to at least one event of the plurality of events.

9. A computer-implemented method for representing an object model, wherein the method is performed using one or more processors and comprising:
acquiring information about a plurality of entities associated with an object model;
acquiring information about a plurality of events associated with the plurality of entities, wherein at least some of the plurality of events include temporal information of the entities;
evaluating relationships of the entities using the information about the plurality of events; and
generating a representation of the relationships of the entities using the temporal information.

10. The method of claim 9, further comprising:
receiving user input; and
updating the representation in response to the user input.

11. The method of claim 9 or 10, wherein the representation includes a plurality of timelines wherein:
a first entity of the plurality of entities corresponds to a first timeline of the plurality of timelines and a second entity of the plurality of entities corresponds to a second timeline of the plurality of timelines; and
a first event of the plurality of events corresponds to the first entity and is placed on the first timeline.

12. The method of claim 11, wherein:
the first event is placed on the second timeline based on the first event corresponding to the second entity; and
the first event placed on the first timeline is connected to the first event placed on the second timeline.

13. The method of any one of claims 9-12, wherein the representation includes information about at least one property associated with at least one event of the plurality of events.

14. The method of any one of claims 9-13, wherein the representation includes a map displaying location information about at least one object of the object model, wherein the at least one object corresponds to at least one entity of the plurality of entities or to at least one event of the plurality of events.

15. A computer readable storage medium storing instructions that are executable by a computing device that includes one or more processors to cause the first computing device to perform a method according to any preceding claim.
